(19) Europäisches Patentamt
European Patent Office
Office européen des brevets

(11) **EP 2 343 632 A1**

(12) **EUROPEAN PATENT APPLICATION**
published in accordance with Art. 153(4) EPC

(43) Date of publication:
**13.07.2011 Bulletin 2011/28**

(51) Int Cl.:
**G06F 3/041** (2006.01)  **G09G 3/20** (2006.01)
**G09G 5/00** (2006.01)

(21) Application number: **09822036.1**

(22) Date of filing: **14.10.2009**

(86) International application number:
**PCT/JP2009/068088**

(87) International publication number:
**WO 2010/047339 (29.04.2010 Gazette 2010/17)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **24.10.2008 JP 2008274382**

(71) Applicant: **NEC Corporation
Minato-ku
Tokyo 108-8001 (JP)**

(72) Inventor: **TAKANO, Satoshi
Tokyo 108-8001 (JP)**

(74) Representative: **Vossius & Partner
Siebertstrasse 4
81675 München (DE)**

(54) **TOUCH PANEL DEVICE OPERATING AS IF IN THE EQUIVALENT MODE EVEN WHEN DETECTED REGION IS SMALLER THAN DISPLAY REGION OF DISPLAY DEVICE**

(57) In a touch panel device, a touch panel control circuit converts a detection signal from a touch panel 31 by projective transformation into a coordinate signal on a display 21 in such a manner that virtually enlarges at least a detection region 31a of the touch panel 31 over an entire display region 21 a of the display 21.

FIG. 3

**Description**

Technical Field

This invention relates to a touch panel device applied as a user interface device together with a display device to an electronic apparatus.

Background Art

The market demands portable electronic apparatuses having a display, such as cell phones, to have a larger display screen while being reduced in casing size. The trend in recent years is to employ a display that is as large as the casing size in order to meet both of the demands.

In electronic apparatuses having a display, a touch panel is often mounted as a user interface (UI) that cooperates with the display in order to manipulate the electronic apparatus in a simple and quick manner. Touch panels are substantially transparent so as not to block the visibility of a display 21, and are a type of sensor disposed on a front surface of the display to be touched on a surface by a touching object, which is a detection subject such as a user's finger or a pen, and to output a detection signal corresponding to the touch point of the touching object. Detection methods include thin-film resistive methods and capacitive methods.

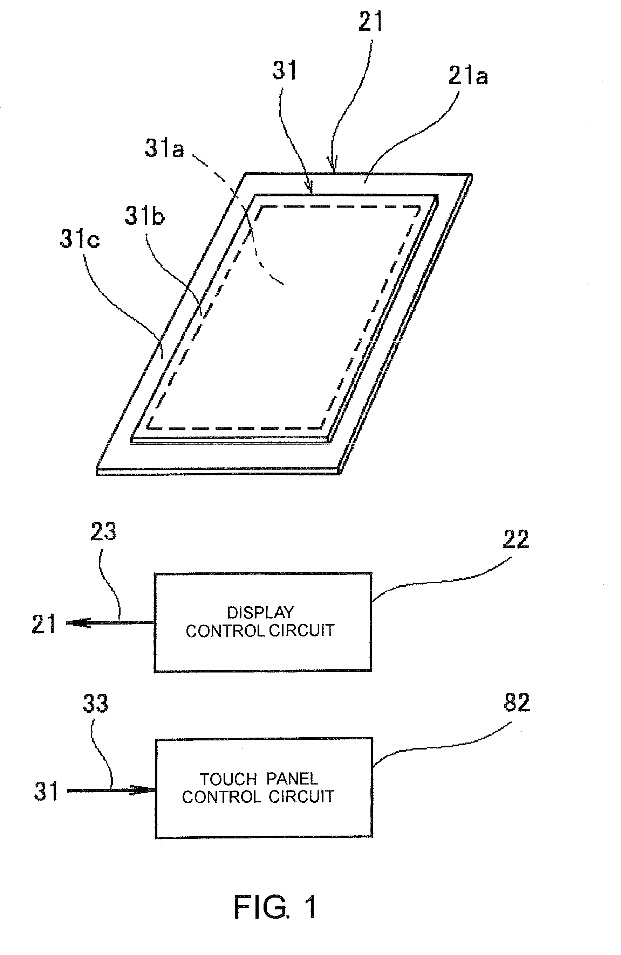

Referring to Fig. 1, a touch panel device according to a related art of this invention is applied to an electronic apparatus equipped with a display device.

The display device includes the display 21, a display control circuit 22, and a display wiring line 23. The display 21 has a display region 21 a, which is substantially equal in area to a surface constituting the outer shape of the display 21. The display control circuit 22 drives the display 21 based on a signal from a host circuit of the electronic apparatus. The display wiring line 23 is led out of the display 21 and connected to the display control circuit 22.

The touch panel device includes a touch panel 31, a touch panel control circuit 82, and a touch panel wiring line 33. The touch panel 31 is made of indium tin oxide (ITO) or the like to be substantially transparent, and is disposed on the front surface of the display 21 and outputting a detection signal corresponding to a touch point. The touch panel control circuit 82 is placed inside a casing of the electronic apparatus together with the display control circuit 22, converts a detection signal from the touch panel 31 into a coordinate signal in the display 21, and outputs the coordinate signal to the host circuit. The touch panel wiring line 33 is made of ITO to be substantially transparent so as not to block the visibility of the display 21, and is led out from an edge of the display 21 to be connected to the touch panel control circuit 82.

Note that, the illustration of the display control circuit 22, the display wiring line 23, the touch panel control circuit 82, and the touch panel wiring line 33 of Fig.

1 is conceptual and differs from the actual locations, shapes, and sizes of the components for the convenience of description.

Other than the one illustrated in Fig. 1, touch panel devices of this type are disclosed in, for example, Japanese Unexamined Patent Application Publication (JP-A) No. 2002-340601 (Related Art Document 1), JP-A No. 2006-139655 (Related Art Document 2), and JP-A No. 11-085397 (Related Art Document 3).

In the touch panel device of Fig. 1, considering the convenience of wiring of the touch panel wiring line 33 and other factors, the outer shape of the touch panel 31 needs to be smaller than the display region 21a of the display 21 under the current circumstances. A region 31c where the touch panel 31 cannot cover the display region 21 a of the display 21 therefore exists.

In the case where the touching object touches a rim of the touch panel 31 and is outside the touch panel 31, a minimum touch area necessary for the normal recognition of the fact that the touch panel 31 has been touched is not satisfied. Therefore, the touch panel 31 also has a region 31b where a failure to normally detect a touch point is a possibility.

Consequently, a detection region 31a where a touch point can be detected normally in the touch panel 31 is smaller than the display region 21a of the display 21. This is not desirable in terms of the usability of the UI, which is implemented through the cooperation of the display device and the touch panel device.

Disclosure of the Invention

An object of this invention is therefore to provide a touch panel device that operates in the same manner as when a detection region is as large as a display region of a display despite the detection region being smaller than the display region.

Another object of this invention is to provide a user interface device including the above-mentioned touch panel device.

Still another object of this invention is to provide an electronic apparatus including the above-mentioned user interface device.

According to this invention, there is obtained a touch panel device, including: a touch panel which is rectangular and mounted to a front surface of a display which is rectangular in a barycentric manner and outputting a detection signal corresponding to a touch point at which a touching object as a detection subject has touched the touch panel; and a touch panel control circuit converting the detection signal from the touch panel by projective transformation into a coordinate signal representing X-Y coordinates on the display, the touch panel including a detection region smaller than a display region of the display by given size differences along an X side and a Y side, respectively, in which the touch panel control circuit converts the detection signal by the projective transformation into the coordinate signal so that at least the detection region of the touch panel is virtually enlarged over the entire display region of the display.

The projective transformation by the touch panel control circuit may be expressed by Expressions (1) and (2):

$$g(x) = x \times (Xd + 2A)/Xs - A \ ... \ (1);$$

and

$$g(y) = y \times (Yd + 2B)/Ys - B \ ... \ (2),$$

where:

g(x) and g(y) represent X-Y coordinates that is the coordinate signal and in that the unit thereof is a count of pixels of the display on the display, x and y represent a touch point on the detection region of the touch panel that is the detection signal and in that the unit thereof is a count of detection elements of the touch panel, Xd and Yd represent a size of the detection region of the touch panel in that the unit thereof is a count of pixels of the display, Xs and Ys represent the size of the detection region of the touch panel in that the unit thereof is a count of detection elements of the touch panel, and A and B represent the size differences between the display region of the display and the detection region of the touch panel along the X side and the Y side in that the unit thereof is a count of pixels of the display.

In the projective transformation by the touch panel control circuit, the projection magnification rate may be adjusted.

The touch panel control circuit may include a memory for storing parameters of the projection magnification rate.

The given size differences between the display region of the display and the detection region of the touch panel along the X side and the Y side may each be smaller than a size of the touching object.

Further, according to this invention, there is obtained a user interface device mounted to an electronic apparatus and controlling operation, including displaying on a display, of the electronic apparatus based on manipulation by a user through a touch, including the touch panel device, a display device comprising the display and a display control circuit driving the display, and a user interface control circuit commanding the display control circuit based on the coordinate signal from the touch panel device so that displayed content on the display is changed.

Further, according to this invention, there is obtained an electronic apparatus, including the user interface device.

Brief Description of the Drawings

Fig. 1 is a diagram illustrating a touch panel device according to a related art of this invention.
Fig. 2 is a diagram illustrating a touch panel device according to a first embodiment of this invention.
Fig. 3 is a conceptual diagram illustrating operation of the touch panel device of Fig. 1.
Fig. 4 is a block diagram illustrating a user interface device including the touch panel device of Fig. 1.
Fig. 5 is a flow chart illustrating operation of the user interface device of Fig. 4.
Fig. 6 is a block diagram illustrating a user interface device including a touch panel device according to a second embodiment of this invention.
Fig. 7 is a flow chart illustrating operation of the user interface device of Fig. 6.

Best Modes for Embodying the Invention

A touch panel device according to this invention includes: a touch panel which is rectangular and mounted to a front surface of a display which is rectangular in a barycentric manner and outputting a detection signal corresponding to a touch point at which a touching object as a detection subject has touched the touch panel; and a touch panel control circuit converting the detection signal from the touch panel by projective transformation into a coordinate signal representing X-Y coordinates on the display. The touch panel includes a detection region smaller than a display region of the display by given size differences along an X side and a Y side, respectively.

In particular, the touch panel control circuit converts the detection signal by the projective transformation into the coordinate signal so that at least the detection region of the touch panel is virtually enlarged over the entire display region of the display.

Structured as described above, the touch panel device according to this invention operates in the same manner as when the detection region is as large as the display region of the display despite the detection region being smaller than the display region.

A detailed description is given below with reference to the drawings on more concrete embodiments of this invention in the form of a touch panel device and a touch panel type display device.

[First Embodiment]

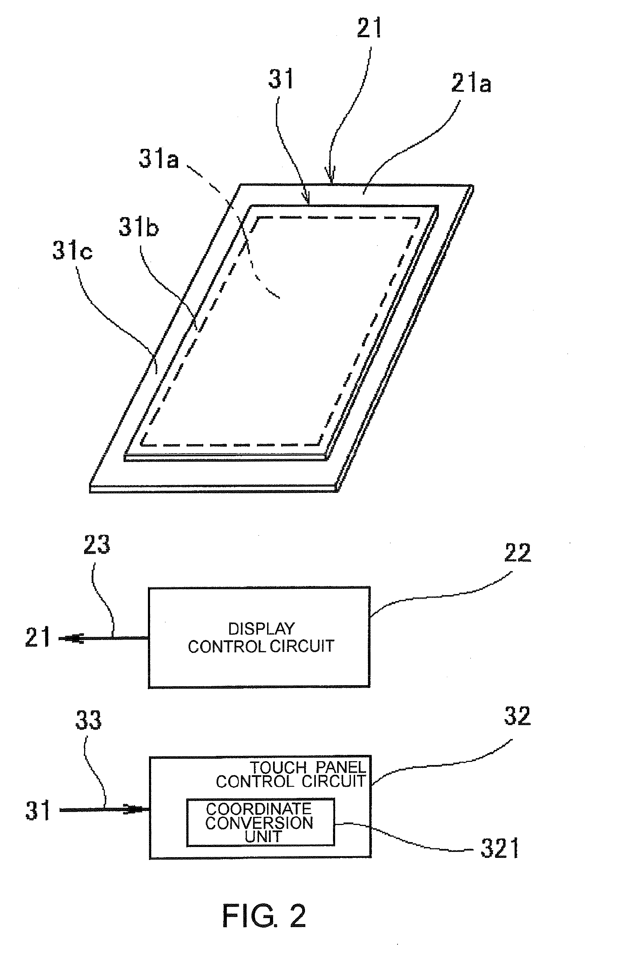

Referring to Fig. 2, a touch panel device according to a first embodiment of this invention is applied to a cell phone equipped with a display device.

The display device includes a display 21, a display control circuit 22, and a display wiring line 23. The display 21 is rectangular and has a display region 21 a, which is the same size as a surface constituting the outer shape of the display 21. The display control circuit 22 drives the display 21 based on a signal from a host circuit of an electronic apparatus. The display wiring line 23 is led out of the display 21 and connected to the display control circuit 22.

The touch panel device includes a touch panel 31, a touch panel control circuit 32, and a touch panel wiring line 33. The touch panel 31 is rectangular and made of ITO or the like to be substantially transparent so as not to block the visibility of the display 21. The touch panel 31 is disposed on a front surface of the display 21 in a barycentric manner, and outputting a detection signal corresponding to a touch point where a touching object, which is a detection subject such as a user's finger or a stylus pen, touches the touch panel 31. The touch panel control circuit 32 is placed inside a casing of the electronic apparatus together with the display control circuit 22, and has a coordinate conversion unit 321 which converts a detection signal from the touch panel 31 by projective transformation into a coordinate signal representing X-Y coordinates on the display 21 to output the coordinate signal to the host circuit. The touch panel wiring line 33 is made of ITO or the like to be substantially transparent so as not to block the visibility of the display 21, and is led out from an edge of the display 21 to be connected to the touch panel control circuit 32.

In Fig. 2, denoted by a symbol 31c is a region where the touch panel 31 cannot cover the display region 21 a of the display 21. Denoted by a symbol 31b is a region where a failure to normally detect a touch point is a possibility. Denoted by a symbol 31a is a detection region where a touch point can be detected normally in the touch panel 31.

Note that, the illustration of the display control circuit 22, the display wiring line 23, the touch panel control circuit 32, and the touch panel wiring line 33 of Fig. 2 is conceptual and differs from the actual locations, shapes, and sizes of the components for the convenience of description.

In this touch panel device, in particular, the coordinate conversion unit 321 converts a detection signal from the touch panel 31 by projective transformation into a coordinate signal in a manner that virtually enlarges at least the detection region 31 a of the touch panel 31 over the entire display region 21a of the display.

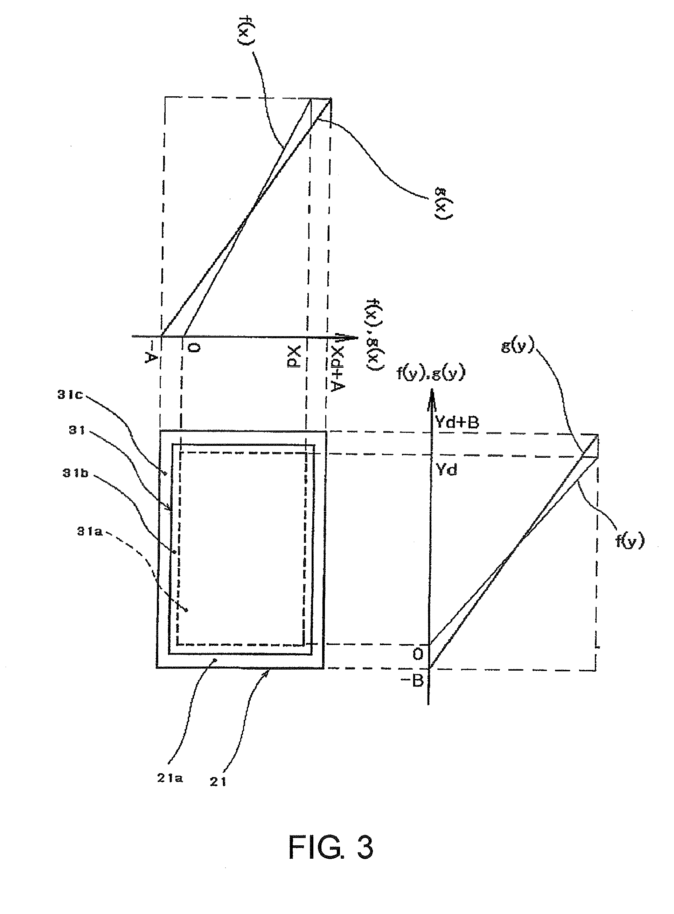

The enlarging projective transformation by this device is described with reference to Fig. 2 and Fig. 3.

When touched by a touching object such as a user's finger or a stylus pen, the touch panel 31 outputs a detection signal corresponding to a touch point (x, y) of the touching object.

The detection signal is input via the touch panel wiring line 33 to the coordinate conversion unit 321 of the touch panel control circuit 32, and the coordinate conversion unit 321 performs projective transformation that is expressed by the following Expressions (1) and (2). In those expressions, g(x) and g(y) represent X-Y coordinates (coordinate signal) on the display 21. The unit thereof is the count of pixels of the display. Symbols x and y represent a touch point (detection signal) on the detection region 31a of the touch panel 31. The unit thereof is the count of detection elements of the touch panel. Symbols Xd and Yd represent the size of the detection region 31a of the touch panel 31. The unit thereof is the count of pixels of the display 21. Symbols Xs and Ys, too, represent the size of the detection region of the touch panel. The unit thereof, however, is the count of detection elements of the touch panel 31. Symbols A and B represent size differences between the display region 21a of the display 21 and the detection region 31a of the touch panel 31 along an X side and a Y side. The unit thereof is the count of pixels of the display.

$$g(x)=x\times(Xd+2A)/Xs-A \ ... \ (1)$$

$$g(y)=y\times(Yd+2B)/Ys-B \ ... \ (2)$$

Through this projective transformation, the detection region 31 a of the touch panel 31 is virtually enlarged by 2A in an X direction and by 2B in a Y direction. In other words, the detection region 31a is virtually enlarged over the entire display region 21 a of the display 21.

A more concrete example is described. The size of the detection region 31a of the touch panel 31 is 3,000x5,400 [in detection element count], which corresponds to 470x844 in pixel count. The outer size of the display 21, or the size of the display region 21a constituting the outer shape of the display 21, is 480x864 [in pixel count]. The size differences A and B between the display region 21a of the display 21 and the detection region 31a of the touch panel 31 along the X side and the Y side are therefore 5 and 10 [in pixel count], respectively.

Those parameters are substituted in the Expressions (1) and (2) as follows.

$$g(x)=x\times(470+10)/3000-5 \ ... \ (3)$$

$$g(y)=y\times(844+20)/5400-10 \ ... \ (4)$$

When the detection region 31a of the touch panel 31 is touched, the coordinate conversion unit 321 of the touch panel control circuit 32 substitutes x and y in the above-mentioned Expressions (3) and (4) with a touch point (x, y) [in detection element count] to calculate the X-Y coordinates (g(x), g(y)) [in pixel count]. For example, (g(x), g(y))=(473, 855) when (x, y)=(2,990, 5,395), and (g(x), g(y))=(235, 422) when (x, y)=(1,500, 2,700).

Preferably, the size differences between the display region 21 a of the display 21 and the detection region 31 a of the touch panel 31 along the X side and the Y side (A, B) are each set smaller than the size of any touching object. This is because the size difference equal to or larger than the size of the touching object means a significant gap between the actually touched point and the point recognized by the touch panel device, and makes the user wonder about the accuracy.

The touch panel control circuit 82 according to a related art which is illustrated in Fig. 1 performs projective transformation that is expressed by the following Expressions (3) and (4). In those expressions, f(x) and f(y) represent X-Y coordinates (coordinate signal) on the display 21. The unit thereof is the count of pixels of the display.

$$f(x) = x \times Xd/Xs \ldots (5)$$

$$f(y) = y \times Yd/Ys \ldots (6)$$

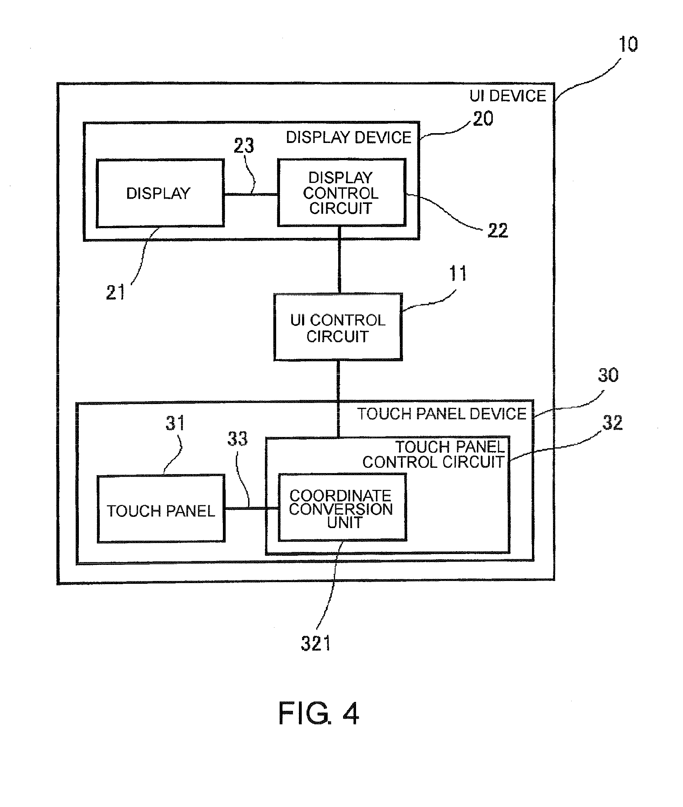

Referring to Fig. 4, a user interface (UI) device 10 according to the first embodiment of this invention is mounted to an electronic apparatus such as a cell phone and executes user interface (UI) processing, which causes the electronic apparatus to operate in accordance with a user's manipulation. The UI device 10 includes a display device 20, which includes the display 21 and the display control circuit 22, a touch panel device 30, which includes the touch panel 31 and the touch panel control circuit 32, and a user interface (UI) control circuit 11, which serves as a host circuit with respect to the display control circuit 22 and the touch panel control circuit 32.

The UI control circuit 11 obtains a coordinate signal, which is based on the user's manipulation (touching the touch panel 31) and which indicates X-Y coordinates on the display 21, via the touch panel control circuit 32 of the touch panel device 30. At the same time, the UI control circuit 11 commands the display control circuit 22 of the display device 20 to change what is displayed on the display 21 based on the coordinate signal.

Those events to be executed in conjunction with a user's manipulation through a touch on the touch panel are called touch events. The operation of changing what is displayed on the display 21 based on a touch event is executed through the UI processing by the UI device 10. More concrete examples of touch events include: graphically displaying the pressing of a software button such as an icon, a menu button, or a software keyboard on the display 21 and transmitting information that is associated with the pressed button to the host circuit; graphically displaying a hand-written character in hand-written character input software; and drawing an image in drawing software.

The display control circuit 22 of the display device 20, the touch panel control circuit 32 of the touch panel device 30, and the UI control circuit 11 of the UI device 10 may be built from hardware resources such as an arithmetic circuit and a storage element, and from software resources such as an application program that is stored in the storage element and causes the arithmetic circuit to perform control operation.

The display control circuit 22, the touch panel control circuit 32, and the UI control circuit 11 may also be built from separate hardware resources and separate software resources. Alternatively, the control circuits may share hardware resources and software resources with the UI device 10, which is a host to the control circuits. The control circuits may also share hardware resources and software resources with the electronic apparatus, which is a host to the UI device 10.

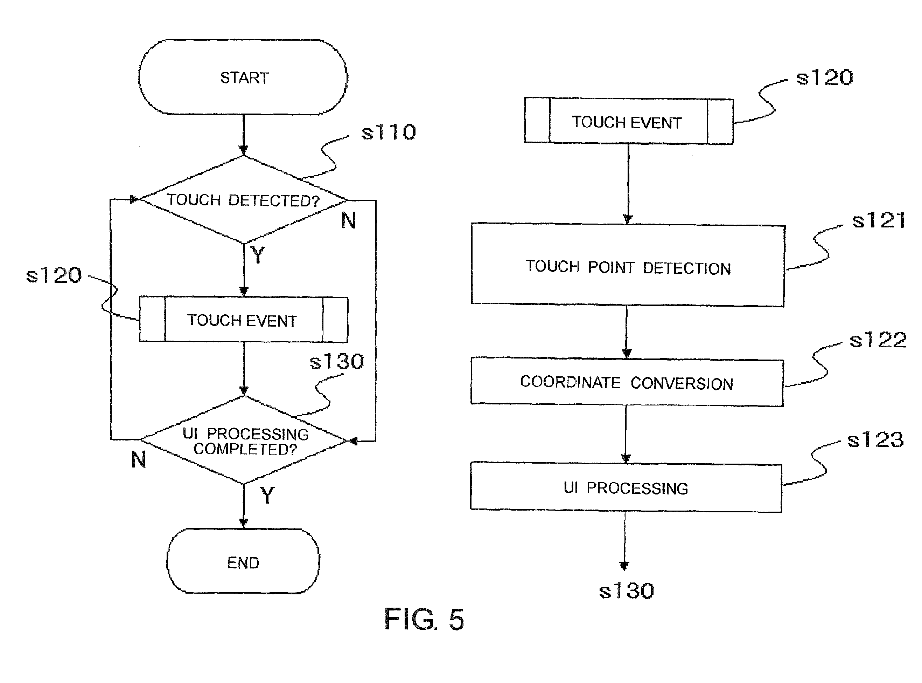

Operation of the UI device 10 according to this embodiment is described next with reference to Figs. 2 to 5. This operation includes operation of the touch panel device 30 according to this embodiment.

The UI control circuit 11 of the UI device 10 detects via the touch panel control circuit 32 of the touch panel device 30 that a user has touched the touch panel 31 (Step s110), and then issues a touch event (Step s120).

Next, a detection signal corresponding to the touch point on the touch panel 31 is input from the touch panel 31 to the touch panel control circuit 32 (Step s121).

The coordinate conversion unit 321 of the touch panel control circuit 32 converts the detection signal from the touch panel 31 by projective transformation into a coordinate signal representing X-Y coordinates on the display in a manner that virtually enlarges the detection region 31 a of the touch panel 31 over the entire display region 21 a of the display 21, and outputs the coordinate signal to the UI control circuit 11 (Step s122).

As the UI processing, the UI control circuit 11 issues an instruction to the display control circuit 22 to change what is displayed on the display 21 in accordance with the touch point based on the coordinate information from the touch panel control circuit 32 and, if necessary, transmits the coordinate information to (a control unit of) the electronic apparatus (Step s123). The display control circuit 22 drives the display 21 based on the instruction from the UI control circuit 11, at which point the UI processing is completed (Step s130).

[Second Embodiment]

A touch panel device according to a second embodiment of this invention differs from the first embodiment in that a touch panel control circuit can adjust the projection magnification rate of projective transformation, and that the touch panel control circuit has a memory for storing parameters of the projection magnification rate. In the second embodiment, components that are the same as or similar to those in the first embodiment are denoted by the same symbols and detailed descriptions on those components are omitted.

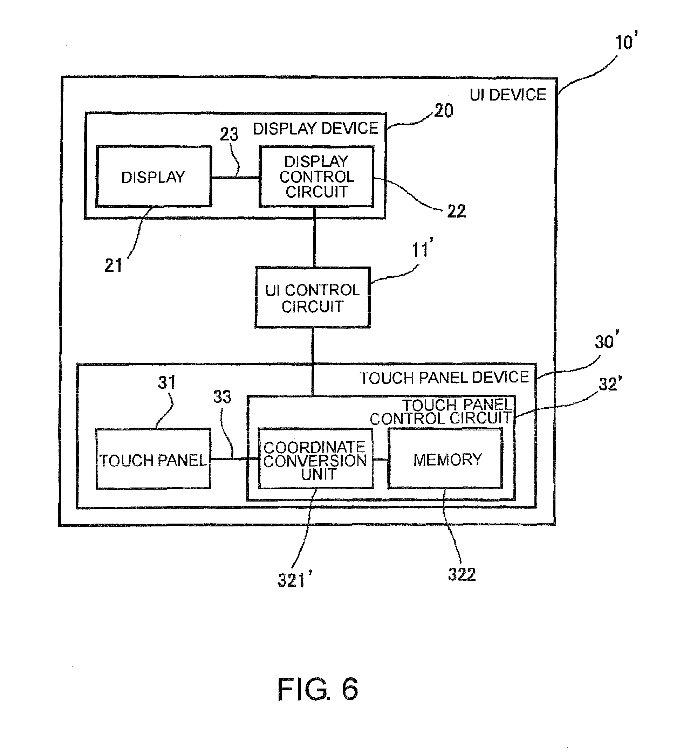

Referring to Fig. 6, a user interface (UI) device 10', which includes a touch panel device 30' according to the second embodiment of this invention, is mounted to an electronic apparatus such as a cell phone and executes user interface (UI) processing, which causes the electronic apparatus to operate in accordance with a user's manipulation. The UI device 10' includes the display device 20, the touch panel device 30', and a user interface (UI) control circuit 11'.

In the touch panel device 30', in particular, a coordinate conversion unit 321' of a touch panel control circuit 32' is capable of adjusting a projection magnification rate of projective transformation. The touch panel control circuit 32' has a memory 322 for storing parameters of the projection magnification rate.

As in the first embodiment described with reference to Fig. 3, the coordinate conversion unit 321' performs the projective transformation that is expressed by Expressions (1) and (2), specifically, projective transformation that virtually enlarges the detection region 31a (Fig. 3) of the touch panel 31 over the entire display region 21 a (Fig. 3) of the display 21. In those expressions, A and B, which represent the respective size differences between the display region 21a of the display 21 and the detection region 31 a of the touch panel 31 along the X side and the Y side, can also be regarded as parameters of the magnification rate of projective transformation. For example, the magnification rate of projective transformation is 1 when A and B are both 0. The coordinate conversion unit 321' in this embodiment can adjust A and B.

The memory 322 stores A and B, which are parameters of a magnification rate reached through projective transformation, in a plurality of pairs as candidate parameters of the magnification rate to choose from.

The magnification rate of projective transformation is adjusted selectively on a screen design basis, for example. The UI device 11' notifies the coordinate conversion unit 321' of the touch panel control circuit 32' of the touch panel device 30' which pair of parameters stored in the memory 322 to choose, in order to set a magnification rate suitable for the screen design of software to be executed. More specifically, the magnification rate of projective transformation is adjusted to a high rate when executing, for example, drawing software that may use the screen from side to side and end to end to draw an image, whereas the magnification rate of projective transformation is adjusted to a low rate when displaying a software keyboard that contains many keys.

The magnification rate of projective transformation may be adjusted on an individual touch panel basis because, in the manufacture of the touch panel, the size of the detection region 31a (Fig. 3) may slightly fluctuate from one to another.

The size of the detection region 31 a (Fig. 3) may also fluctuate due to the influence of various disturbances such as temperature, humidity, static electricity, and electromagnetic waves. This may be addressed by correcting parameters of the magnification rate of projective transformation based on measurement results of various disturbances when the UI device 10' (touch panel device 30') is started up.

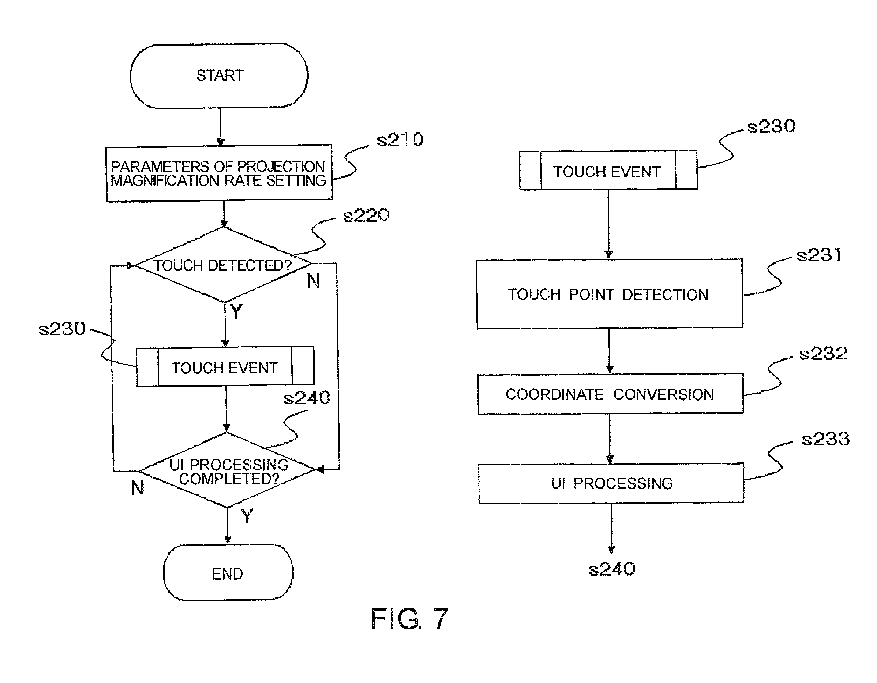

Operation of the UI device 10' according to this embodiment is described next with reference to Fig. 6 and Fig. 7. This operation includes operation of the touch panel device 30' according to this embodiment.

First, the UI control circuit 11', when started up, instructs the touch panel control circuit 32' of the touch panel device 30' to search the memory 322 for appropriate parameters and to set the parameters as A and B in Expressions (1) and (2) with the use of the coordinate conversion unit 321 (Step s210). Receiving the instruction, the coordinate conversion unit 321 uses the set A and B in projective transformation.

Next, the UI control circuit 11' of the UI device 10' detects via the touch panel control circuit 32' of the touch panel device 30 that a user has touched the touch panel 31 (Step s220), and then issues a touch event (Step s230).

Next, a detection signal corresponding to the touch point on the touch panel 31 is input from the touch panel 31 to the touch panel control circuit 32' (Step s231).

The coordinate conversion unit 321 of the touch panel control circuit 32 converts the detection signal from the touch panel 31 by projective transformation into a coordinate signal representing X-Y coordinates on the display in a manner that virtually enlarges the detection region 31a (Fig. 3) of the touch panel 31 over the entire display region 21a a (Fig. 3) of the display 21, and outputs the coordinate signal to the UI control circuit 11' (Step s232).

As the UI processing, the UI control circuit 11' issues an instruction to the display control circuit 22 to change what is displayed on the display 21 in accordance with the touch point based on the coordinate information from the touch panel control circuit 32' and, if necessary, transmits the coordinate information to (a control unit of) the electronic apparatus (Step s233). The display control circuit 22 drives the display 21 based on the instruction from the UI control circuit 11', at which point the UI processing is completed (Step s240).

This invention is not limited to the embodiments described above, and it goes without saying that various modifications can be made to this invention within the technical scope set forth in the following scope of patent claims. For instance, this invention is applicable to other electronic apparatuses that have a display and a touch panel than cell phones, such as PDAs, personal computers, digital cameras, video cameras, game machines, display monitors, and television sets.

This application claims priority from Japanese Patent Application No. 2008-274382, filed on October 24, 2008, the entire disclosure of which is incorporated herein by reference.

## Claims

1. A touch panel device, comprising:

    a touch panel which is rectangular and mounted to a front surface of a display which is rectangular in a barycentric manner and outputting a detection signal corresponding to a touch point at which a touching object as a detection subject has touched the touch panel; and
    a touch panel control circuit converting the detection signal from the touch panel by projective transformation into a coordinate signal representing X-Y coordinates on the display;
    the touch panel comprising a detection region smaller than a display region of the display by size differences along an X side and a Y side, respectively;
    wherein the touch panel control circuit converts the detection signal by the projective transformation into the coordinate signal so that at least the detection region of the touch panel is virtually enlarged over the entire display region of the display.

2. A touch panel device according to claim 1, wherein the projective transformation by the touch panel control circuit is expressed by Expressions (1) and (2):

    $$g(x) = x \times (Xd + 2A)/Xs - A \ ... \ (1);$$

    and

    $$g(y) = y \times (Yd + 2B)/Ys - B \ ... \ (2),$$

    where:

    g(x) and g(y) represent X-Y coordinates on the display that is the coordinate signal and in that the unit thereof is a count of pixels of the display,
    x and y represent a touch point on the detection region of the touch panel that is the detection signal and in that the unit thereof is a count of detection elements of the touch panel,
    Xd and Yd represent a size of the detection region of the touch panel in that the unit thereof is a count of pixels of the display,
    Xs and Ys represent the size of the detection region of the touch panel in that the unit thereof is a count of detection elements of the touch panel, and
    A and B represent the size differences between the display region of the display and the detection region of the touch panel along the X side and the Y side in that the unit thereof is a count of pixels of the display.

3. A touch panel device according to claim 2, wherein, in the projective transformation by the touch panel control circuit, a projection magnification rate can be adjusted.

4. A touch panel device according to claim 3, wherein the touch panel control circuit comprises a memory storing parameters of the projection magnification rate.

5. A touch panel device according to claim 1, wherein the size differences between the display region of the display and the detection region of the touch panel along the X side and the Y side are smaller than sizes of the touching object along the X side and the Y side, respectively.

6. A user interface device mounted to an electronic apparatus and controlling operation, including displaying on a display, of the electronic apparatus based on manipulation by a user through a touch, comprising:

    the touch panel device according to claim 1;
    a display device comprising the display and a display control circuit driving the display; and
    a user interface control circuit commanding the display control circuit based on the coordinate signal from the touch panel device so that displayed content on the display is changed.

7. An electronic apparatus, comprising the user interface device according to claim 6.

31a
31b
31c
31
21
21a

DISPLAY
CONTROL CIRCUIT

23
21
22

TOUCH PANEL
CONTROL CIRCUIT

33
31
82

FIG. 1

DISPLAY
CONTROL CIRCUIT

TOUCH PANEL
CONTROL CIRCUIT

COORDINATE
CONVERSION
UNIT

FIG. 2

FIG. 3

FIG. 4

EP 2 343 632 A1

```
                  ┌──────────────┐
                  │    START     │
                  └──────┬───────┘
                         │            ⌐s110
                         ▼
                  ╱───────────────╲
             ┌───◄  TOUCH DETECTED? ►─── N
             │    ╲───────────────╱
             │           │ Y
             │           ▼
   s120      │    ┌──────────────┐
     ╲       │    ││  TOUCH EVENT ││
             │    └──────┬───────┘
             │           │        ⌐s130
             │           ▼
             │    ╱───────────────╲
             │   ╱  UI PROCESSING   ╲
             └──◄    COMPLETED?      ►
             N   ╲                  ╱
                  ╲────────┬───────╱
                           │ Y
                           ▼
                  ┌──────────────┐
                  │     END      │
                  └──────────────┘
```

```
   ┌──────────────────────┐        ⌐s120
   ││    TOUCH EVENT       ││
   └──────────┬───────────┘
              │
              ▼
   ┌──────────────────────┐        ⌐s121
   │                      │
   │  TOUCH POINT DETECTION│
   │                      │
   └──────────┬───────────┘
              │
              ▼
   ┌──────────────────────┐        ⌐s122
   │  COORDINATE CONVERSION│
   │                      │
   └──────────┬───────────┘
              │
              ▼
   ┌──────────────────────┐        ⌐s123
   │     UI PROCESSING     │
   │                      │
   └──────────┬───────────┘
              │
              ▼
            s130
```

FIG. 5

EP 2 343 632 A1

FIG. 6

13

EP 2 343 632 A1

START

PARAMETERS OF PROJECTION
MAGNIFICATION RATE SETTING — s210

TOUCH DETECTED? — s220

N

Y

TOUCH EVENT — s230

s240

UI PROCESSING
COMPLETED?

N

Y

END

TOUCH EVENT — s230

TOUCH POINT DETECTION — s231

COORDINATE CONVERSION — s232

UI PROCESSING — s233

s240

FIG. 7

# EP 2 343 632 A1

<table>
<tr><td colspan="2" align="center"><b>INTERNATIONAL SEARCH REPORT</b></td><td>International application No.<br>PCT/JP2009/068088</td></tr>
</table>

**A. CLASSIFICATION OF SUBJECT MATTER**
*G06F3/041*(2006.01)i, *G09G3/20*(2006.01)i, *G09G5/00*(2006.01)i

According to International Patent Classification (IPC) or to both national classification and IPC

**B. FIELDS SEARCHED**

Minimum documentation searched (classification system followed by classification symbols)
G06F3/041, G09G3/20, G09G5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-237160 A  (Canon Inc.),<br>09 September 1997 (09.09.1997),<br>claims; paragraphs [0027] to [0028]; fig. 4 to 5<br>(Family: none) | 1-7 |
| A | JP 11-39093 A  (Toshiba Corp.),<br>12 February 1999 (12.02.1999),<br>paragraph [0096]<br>(Family: none) | 1-7 |
| A | JP 64-29922 A  (Brother Industries, Ltd.),<br>31 January 1989 (31.01.1989),<br>claims; page 4, upper left column, line 2 to<br>upper right column, line 2; fig. 4<br>(Family: none) | 1-7 |

☐ Further documents are listed in the continuation of Box C. ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>13 January, 2010 (13.01.10) | Date of mailing of the international search report<br>26 January, 2010 (26.01.10) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002340601 A
- JP 2006139655 A
- JP 11085397 A
- JP 2008274382 A